# EUROPEAN PATENT SPECIFICATION

(11) **EP 4 368 283 B1**
(45) Date of publication and mention of the grant of the patent: **25.06.2025**
(21) Application number: 22705068.9
(22) Date of filing: 20.01.2022
(51) Int. Cl.: B01F 23/232, B01F 23/231, B01F 23/454, B01F 25/30, B01F 25/21, B03D 1/24, B03D 1/14

(54) **MICROBUBBLE GENERATING NOZZLE**
MIKROBLASEN ERZEUGENDE DÜSE
BUSE GÉNÉRATRICE DE MICROBULLES

(30) Priority: 07.07.2021 ES 202130638
(43) Date of publication of application: 15.05.2024
(73) Proprietor: Acciona Agua, S.A., 08820 El Prat de Llobregat Barcelona (ES)
(72) Inventor: SALVADÓ ESTIVILL, Joan Antoni, 08820 El Prat de Llobregat (Barcelona) (ES); FERRERO POLO, Enrique, 08820 El Prat de Llobregat (Barcelona) (ES); PALACIOS JIMÉNEZ, Enrique, 08820 El Prat de Llobregat (Barcelona) (ES); RUIZ LARA, Germán, 08820 El Prat de Llobregat (Barcelona) (ES)
(74) Representative: Pons
(86) International application number: PCT/ES2022/070028
(87) International publication number: WO 2023/281135

(56) References cited:
- DE-A1- 19 950 600

## Description

### OBJECT OF THE INVENTION

The object of the invention relates to a microbubble generating nozzle, introducing water at low pressure (1.5 bar - 6 bar), without requiring air saturators or compressors, entailing a low energy cost in water treatment stations.

### BACKGROUND OF THE INVENTION

Energy efficiency and sustainability are becoming increasingly important in water treatment operations.

Surface, marine and waste waters contain suspended solids, dissolved and suspended pollutants, which must be separated so that drinking or dumped water strictly complies with government regulations.

Technologies aimed at improving the final quality of waste water and drinking water have been the subject of continuous research, an example of which is flotation, an operation used to separate solids and immiscible liquids suspended in a liquid phase.

One of these technologies is based on the use of facilities that use Dissolved Air Flotation or DAF technology as a step in the water treatment process. Dissolved Air Flotation or DAF technology is an effective method for removing low-density solids or oils and greases that cannot be removed by sedimentation in applications such as drinking water, process water and waste water treatment.

The flotation of solids is obtained by introducing fine bubbles, generally air bubbles, into the liquid phase, through microbubble generating nozzles. The microbubbles are created by cavitation of the air that has previously been dissolved in a water stream treated by the DAF and recirculated (8 to 15%) in a saturator.

The pressurized air/water mixture is sent through a series of rows of nozzles or special injectors, depending on the type of DAF technology. For some applications, nitrogen is used as the flotation gas instead of air.

The sudden pressure difference on either side of the nozzle precipitates the air of the solution and creates microbubbles, which adhere to the solids and float them to the surface of the flotation area. Solid-free water is collected at the bottom of the DAF.

The thrust force generated causes the particles to rise to the surface where they can be easily removed.

As fine bubbles collide and adhere to the particles, the effective density of the resulting agglomerate decreases and the effective diameter thereof increases. The net result is that the particles rise rapidly to the surface of the fluid. As for particles, this phenomenon also applies to water-immiscible fluid droplets that are suspended in the fluid.

The sludge formed by the solids in the upper portion of the tank is hydraulically removed over a stationary weir by raising the water level on a predetermined interval, or mechanically removed with a scraper.

Flotation consists of several steps for the process to be carried out, these steps being as follows:
- Generation and distribution of microbubbles in the water to be treated.
- Collision between the microbubbles and the particles suspended in the water.
- Interfacial contact of the particle/bubble system.
- Entrainment of other particles that are in the path of the agglomerates that have already formed.
- Ascent of the agglomerate to the surface where it must be removed.

Dissolved Air Flotation or DAF is produced with a dispersion of fine air bubbles by dramatically lowering the pressure of an air saturated stream. The content of suspended solids is low and the concentrations of flocs between 5 and 50 mg/l, such as, for example, in the production of drinking water, for pre-treatment in seawater desalination or for treatments for reusing purified waters.

The installations that carry out this process require a compressor and a saturator, which is a pressurised chamber with a recirculation system to force the air that is going to dissolve until it saturates the aqueous phase.

The stream, rich in dissolved air, is taken to the DAF, wherein a controlled decrease in pressure is caused so that the released air generates microbubbles.

In a dissolved air flotation or DAF process, the typical values of the bubble size generated range between 10 and 100 micrometres, the process being quite expensive as it requires the use of a compressor that generates a pressure in the air the values of which are between 5 and 8 bars.

In addition, a pressurised chamber with recirculation and a system to control the pressure when releasing the stream of saturated water is required, which entails an increase in the cost of the water treatment installation.

The generating nozzles that are included in this type of DAF installation exhibit problems in terms of the size of the microbubbles and the relationship between said size and the working pressure of both the water column and the operating water pressure itself.

Moreover, conventional generating nozzles are not scalable to withstand different working conditions, establishing a specific type of generating nozzle for certain working conditions.

Additionally, some of the microbubble generating nozzles exhibit obstruction problems due to the fact that the air current is introduced into the nozzle through capillaries that can be obstructed by water or particles entrained in the system. This type of obstruction completely prevents the operation of the microbubble generating nozzles.

In addition, some of the microbubble generating nozzles based on the introduction of air through capillaries cannot supply different air flows without varying the operating conditions or consumption and, therefore, exhibit less flexibility to adapt to the operating conditions required by each type of water.

These types of nozzles based on the introduction of air through capillaries are currently not applicable to industrial plants with high treatment flows due to the limited water and air flows with which they operate.

Document DE19950600A1 discloses a device for gassing liquids and suspensions comprising a feed pipe (1) of constant cross-section for the liquid to be gassed opening out into vertical flat intermediate chamber (3) which forms parallel plates (2); and a pneumatic connection with the outer air formed in the region of the opening of the feed pipe so that openings (7) are provided in the plates through which gassing air is sucked via a connection (8), the air being distributed in fine bubbles of required size. Preferred features are: The feed pipe is locked with the lower edge of the upper plate forming the intermediate chamber. The plates have a circular shape.

### DESCRIPTION OF THE INVENTION

The invention is defined by a microbubble generating nozzle according to claim 1. Said nozzle enables elements such as the compressor and the saturator to be removed from a water treatment installation that uses Dissolved Air Flotation or DAF techniques, reducing the installation, operation and maintenance costs of the process.

Said nozzle is intended to be located immersed inside a water tank of a DAF installation, but also in other water treatment processes that require the generation of bubbles or microbubbles, such as degreasers, floats or bioreactors, and is used for producing microbubbles that will help separate solid particles and pollutants from the water to be treated.

The microbubble generating nozzle comprises a main body with a first inlet in the upper surface; and with a second inlet in the lateral wall, both inlets being able to be threaded holes.

The first inlet is intended to receive a first connection linked to a duct through which a water stream circulates and the second inlet is intended to receive a second connection which, additionally, is linked to a duct through which an air or gas stream circulates. Both streams, the water stream and the air or gas stream, come from the installation of which the microbubble generating nozzle is a part.

Likewise, the second inlet is located in a lateral recess made in the main body, so that the air or gas inlet inside the main body is as airtight as possible and on a flat surface, without loss of air quantity or pressure variation, since, if the second inlet were directly located on the lateral wall of the main body, due to the curvature of the surface of said wall, there would be gaps through which there could be losses of quantity or pressure of the air stream that is introduced into the nozzle.

The amount of air received by the microbubble generating nozzle is adjustable by using an air adjustment valve that can be located at any point in the installation, before the generating nozzle.

The microbubble generating nozzle functions without the presence of capillaries, avoiding obstructions due to the same, and being able to work in a very wide range of operating conditions, keeping the performance thereof and being able to adapt to different types of water to be treated.

Additionally, the generating nozzle comprises a gauge located in the lower portion of the main body and attached thereto by means of fixing elements, creating a separation between the gauge and the main body, said separation ranging from 0.3 millimetres to 5 millimetres and enabling the nozzle to be scaled to variable operating conditions of pressure and speed of the air and water stream.

The separation formed by the attachment between the gauge and the main body is called the "air-water contact area" wherein the air and water that circulate through the inside of the main body and that is intended after that contact for producing microbubbles come into contact.

The microbubble generating nozzle in turn comprises a first duct that is located inside the main body, which starts from the first inlet and communicates with the air-water contact area, intended to lead the incoming water stream inside the main body to the air-water contact area, into which said first duct opens.

Moreover, inside the main body there is a second duct that starts from the second inlet and is intended to circulate the air through the inside of said main body.

Inside the main body, in addition, a hollow internal ring with a diameter cross section is placed surrounding the first duct and receiving the second duct. Said ring is intended to proportionally distribute the amount of air it receives from the second duct and comprises third ducts that open into the air-water contact area, intended to lead the air that circulates through the mentioned internal ring towards the contact area in a distributed way, producing the microbubbles in that air-water contact area, distributing themselves in the tank wherein the nozzle is immersed.

Finally, the microbubble generating nozzle generates bubbles with a size of up to 50 micrometers without using a saturator or a compressor in the DAF water treatment facility, only introducing water at a pressure ranging from 1.5 bar to 6 bar, optimising the process of separating solids from water using flotation by removing elements of the installation that can cause failures during the process.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, which by way of illustration and not limitation, represent the following:
Figure 1 shows a perspective view of the microbubble generating nozzle.
Figure 2 shows a cross-sectional view of the microbubble generating nozzle.
Figure 3 shows a perspective view of the microbubble generating nozzle with the incorporation of some connections.

### PREFERRED EMBODIMENT OF THE INVENTION

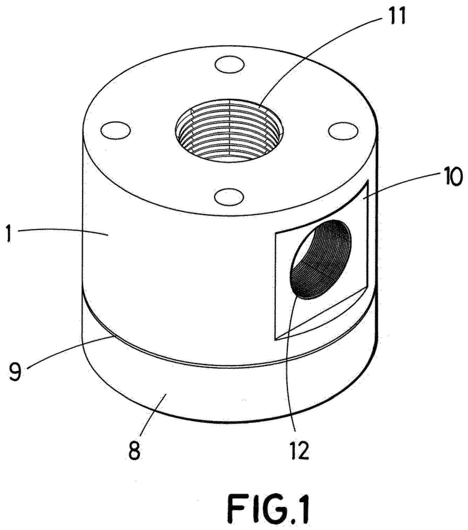

A preferred embodiment of the microbubble generating nozzle is described below with the help of Figures 1, 2 and 3.

Figure 1 shows a perspective view of the microbubble generating nozzle intended to be immersed in a water tank of a water treatment facility, said microbubble generating nozzle comprising a main body (1) with a first inlet (11) in the upper surface of said main body (1) and a second inlet (12) located in a lateral recess (10) of the lateral wall of the main body (1), both inlets (11, 12) being threaded holes.

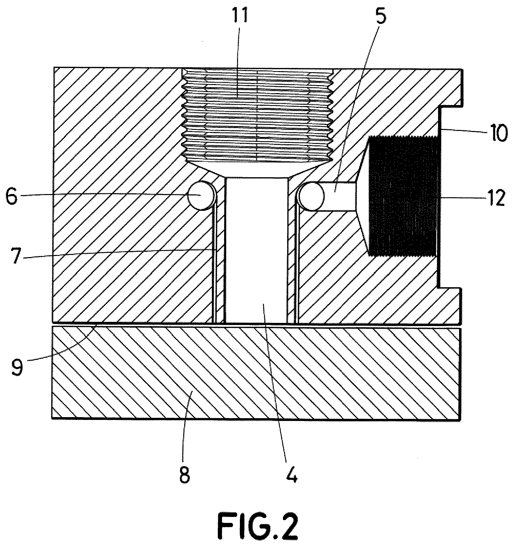

Figure 2 shows a cross-sectional view of the generating nozzle, wherein inside the main body (1) a first duct (4) starts from the first inlet (11) and a second duct (5) that starts from the second inlet (12), the water stream coming from the water duct of the installation that opens into the first connection (2) circulating through the inside of said first duct (4); and the air stream coming from the air duct of the installation that opens into the second connection (3) circulating through the second duct (5).

Moreover, the hollow ring (6) is located surrounding the first duct (4) and transversely receiving the second duct (5); said hollow ring (6) additionally comprising third ducts (7) through which the air that has been proportionally distributed inside the hollow ring (6) circulates.

The microbubble generating nozzle additionally comprises a gauge (8) that is located in the lower portion of the main body (1), attached to said main body (1) by means of fixing elements creating a separation (9) into which the first duct (4) and the third ducts (7) open; and that said separation (9) is intended to produce the microbubbles due to the contact between the water and the air coming from the ducts (4, 7) and to expel the aforementioned microbubbles inside a water tank of the water treatment facility, wherein the nozzle is immersed to achieve the separation of solids using flotation.

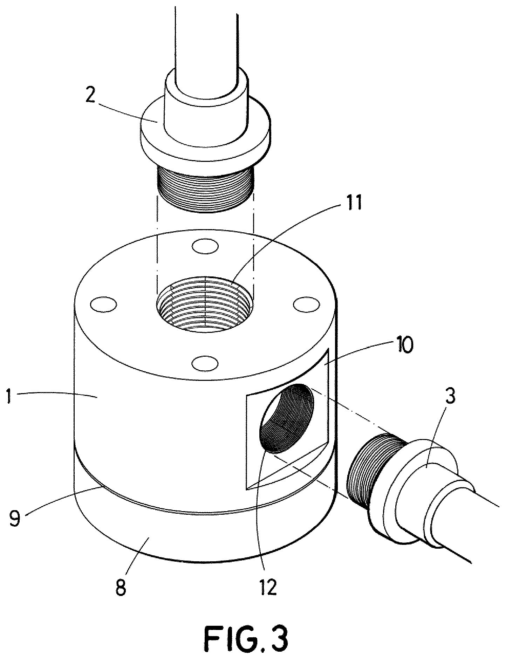

Finally, Figure 3 shows a perspective view of the microbubble generating nozzle and how the first and second inlets (11, 12) are intended to receive a first connection (2) and a second connection (3) respectively. The first connection (2) communicates with a duct through which a water stream circulates and the second connection (3) communicates with a duct through which air or gas circulates.

## Claims

1. A microbubble generating nozzle intended for being immersed in a water tank in water treatment facilities using DAF technology, comprising:
- a main body (1) with at least one first inlet (11) in the upper surface of said main body (1) and at least one second inlet (12) in the lateral wall of the main body (1),
- a first duct (4) that starts from the first inlet (11) and is intended to conduct a water stream through the inside of the main body (1),
- a second duct (5) starting from the second inlet (12) which is intended to conduct an air stream through the inside of the main body (1), said air stream previously controlled by an air adjustment valve,
- A hollow ring (6) with a diameter cross section that is located inside the main body (1) surrounding the first duct (4) and that transversely receives the second duct (5), said hollow ring (6) intended to distribute the air in an equitable manner and which in turn comprises third ducts (7) that are intended to direct the air that circulates through the hollow ring (6) in an equitable manner, and
- a gauge (8) positioned in the area below the main body (1), attached to said main body (1) by means of fixing elements and which creates a separation (9) into which the first duct (4) and the third ducts (7) open, said separation (9) intended to produce microbubbles by contact between the air and water coming from the ducts (4, 7) and expel the microbubbles into the water tank,
wherein the separation (9) enables the nozzle to be scaled to variable operating conditions of pressure and speed of the air and water stream, said separation ranging from 0.3 to 5 millimeters.

2. The microbubble generating nozzle according to claim 1, wherein the main body (1) comprises at least one lateral recess (10) in the lateral wall, wherein the second inlet (12) is located.

3. The microbubble generating nozzle according to claim 1, wherein the first inlet (11) and the second inlet (12) are threaded holes.

4. The microbubble generating nozzle according to claim 3, wherein the first inlet (11) is intended to receive a first connection (2) of a duct through which the water stream circulates and the second inlet (12) is intended to receive a second connection (3) of a duct through which the previously adjusted air or gas stream circulates.

## Patentansprüche

1. Mikroblasen erzeugende Düse zum Eintauchen in einen Wassertank in Wasseraufbereitungsanlagen, unter Verwendung der DAF-Technologie, umfassend:
- einen Hauptkörper (1) mit mindestens einem ersten Einlass (11) in der oberen Fläche des Hauptkörpers (1) und mindestens einem zweiten Einlass (12) in der Seitenwand des Hauptkörpers (1),
- eine erste Leitung (4), die von dem ersten Einlass (11) ausgeht und dazu bestimmt ist, einen Wasserstrom durch das Innere des Hauptkörpers (1) zu leiten,
- eine zweite Leitung (5), die vom zweiten Einlass (12) ausgeht und dazu bestimmt ist, einen Luftstrom durch das Innere des Hauptkörpers (1) zu leiten, wobei dieser Luftstrom zuvor durch ein Luftregulierungsventil gesteuert wird,
- einen hohlen Ring (6) mit einem Querschnitt, der sich im Inneren des Hauptkörpers (1) befindet, der die erste Leitung (4) umgibt und die zweite Leitung (5) quer aufnimmt, wobei der hohle Ring (6) dazu bestimmt ist, die Luft gleichmäßig zu verteilen, und der seinerseits dritte Leitungen (7) umfasst, die dazu bestimmt sind, die durch den hohlen Ring (6) zirkulierende Luft gleichmäßig zu lenken, und
- ein Messgerät (8), das in dem Bereich unterhalb des Hauptkörpers (1) angeordnet ist, mit Hilfe von Befestigungselementen an dem Hauptkörper (1) befestigt ist und einen Abstand (9) herstellt, in den die erste Leitung (4) und die dritte Leitung (7) münden, wobei der Abstand (9) dazu bestimmt ist, durch den Kontakt zwischen der aus den Leitungen (4, 7) kommenden Luft und dem Wasser Mikroblasen zu erzeugen und die Mikroblasen in den Wassertank auszustoßen,
wobei der Abstand (9) es ermöglicht, die Düse auf variable Betriebsbedingungen von Druck und Geschwindigkeit des Luft- und Wasserstroms anzupassen und wobei der Abstand im Bereich von 0,3 bis 5 Millimetern liegt.

2. Mikroblasen erzeugende Düse nach Anspruch 1, wobei der Hauptkörper (1) mindestens eine seitliche Aussparung (10) in der Seitenwand aufweist, in der sich der zweite Einlass (12) befindet.

3. Mikroblasen erzeugende Düse nach Anspruch 1, wobei der erste Einlass (11) und der zweite Einlass (12) Gewindelöcher sind.

4. Mikroblasen erzeugende Düse nach Anspruch 3, wobei der erste Einlass (11) dazu bestimmt ist, einen ersten Anschluss (2) einer Leitung aufzunehmen, durch den der Wasserstrom zirkuliert, und der zweite Einlass (12) dazu bestimmt ist, einen zweiten Anschluss (3) einer Leitung aufzunehmen, durch den der zuvor eingestellte Luft- oder Gasstrom zirkuliert.

## Revendications

1. Buse génératrice de microbulles destinée à être immergée dans un réservoir d'eau dans des installations de traitement de l'eau à l'aide de la technologie DAF, comprenant :
- un corps principal (1) muni d'au moins une première entrée (11) dans la surface supérieure dudit corps principal (1) et au moins une seconde entrée (12) dans la paroi latérale du corps principal (1),
- un premier conduit (4) qui part de la première entrée (11) et est destiné à conduire un écoulement d'eau à travers l'intérieur du corps principal (1),
- un deuxième conduit (5) partant de la seconde entrée (12) qui destiné à conduire un écoulement d'air à travers l'intérieur du corps principal (1), ledit écoulement d'air étant préalablement commandé par un clapet de réglage d'air,
- un anneau creux (6) muni d'une section transversale de diamètre qui est situé à l'intérieur du corps principal (1) entourant le premier conduit (4) et qui reçoit transversalement le deuxième conduit (5), ledit anneau creux (6) étant destiné à distribuer l'air de manière équitable et comprenant à son tour des troisièmes conduits (7) qui sont destinés à diriger l'air qui circule à travers l'anneau creux (6) de manière équitable, et
- une jauge (8) placée dans la zone sous le corps principal (1), attachée audit corps principal (1) au moyen d'éléments de fixation et qui crée une séparation (9) dans laquelle débouchent le premier conduit (4) et le troisième conduit (7), ladite séparation (9) étant destinée à produire des microbulles par contact entre l'air et l'eau provenant des conduits (4, 7) et à expulser les microbulles dans le réservoir d'eau,
dans lequel la séparation (9) permet à la buse d'être adaptée à des conditions de fonctionnement variables en termes de pression et de vitesse de l'écoulement d'air et d'eau, ladite séparation étant comprise entre 0,3 et 5 millimètres.

2. Buse génératrice de microbulles selon la revendication 1, dans laquelle le corps principal (1) comprend au moins un renfoncement latéral (10) dans la paroi latérale, dans laquelle se trouve la seconde entrée (12).

3. Buse génératrice de microbulles selon la revendication 1, dans laquelle la première entrée (11) et la seconde entrée (12) sont des trous filetés.

4. Buse génératrice de microbulles selon la revendication 3, dans laquelle la première entrée (11) est destinée à recevoir un premier raccord (2) d'un conduit à travers lequel circule l'écoulement d'eau et la seconde entrée (12) est destinée à recevoir un second raccord (3) d'un conduit à travers lequel circule l'écoulement d'air ou de gaz préalablement réglé.
